# EUROPEAN PATENT APPLICATION

(11) **EP 4 354 610 A1**
(43) Date of publication of application: **17.04.2024**
(21) Application number: 22891783.7
(22) Date of filing: 25.10.2022
(51) Int. Cl.: H01M 50/202, H01M 50/289

(54) **BATTERY PACK BOX, BATTERY PACK, AND VEHICLE**

(30) Priority: 10.11.2021 CN 202122749722 U
(71) Applicant: Contemporary Amperex Technology Co., Limited, Ningde, Fujian 352100 (CN)
(72) Inventor: SHI, Weigang, Ningde, Fujian 352100 (CN); WU, Guangdang, Ningde, Fujian 352100 (CN); LIU, Anli, Ningde, Fujian 352100 (CN); HUANG, Haihua, Ningde, Fujian 352100 (CN)
(74) Representative: Gong, Jinping
(86) International application number: PCT/CN2022/127163
(87) International publication number: WO 2023/082986

(57) **Abstract**

This application relates to a battery pack box, a battery pack, and a vehicle. The battery pack box (100) includes a box body (110), locking parts (120), and mounting parts (130). The box body (110) includes a bottom plate (114) and side plates (115) extending from the bottom plate (114) along a first direction. The locking parts (120) are disposed on a side of the side plate (115) away from the bottom plate (114) in the first direction. The mounting parts (130) are disposed on a side of the side plate (115) close to the bottom plate (114) in the first direction and disposed in correspondence with part of the locking parts (120) in the first direction. Outer side edges of the locking part (120) and mounting part (130) disposed in correspondence in the first direction are aligned with each other in the first direction.

## Description

### CROSS-REFERENCE TO RELATED APPLICATIONS

This application refers to Chinese Patent Application No. 202122749722.5, filed on November 10, 2021 and entitled "BATTERY PACK BOX, BATTERY PACK, AND VEHICLE", which is incorporated herein by reference in its entirety.

### TECHNICAL FIELD

This application relates to the field of new energy traction battery technologies, and in particular, to a battery pack box, a battery pack, and a vehicle.

### BACKGROUND

With the development of economy in China, the number of vehicles has been gradually increasing. Traditional vehicles mainly use gasoline as a power source, and their exhaust emissions have a significant environmental impact. Therefore, electric vehicles are being vigorously promoted by the Chinese government as transportation tools to replace traditional gasoline-fueled vehicles.

Currently, most of battery pack boxes available for accommodating battery modules in the market are sheet metal boxes or metal alloy die-cast boxes. These two types of boxes can ensure the required strength but haven't provided a satisfactory solution for compatibility between cavity structures, locking surfaces, sealing surfaces, and mounting surfaces. Specifically, in the above two types of boxes, the mounting surface, sealing surface, and upper cover locking surface of the box need to independently occupy space in a height or thickness direction of the box, and the three elements are spatially incompatible, resulting in a large contour size of the box. When mounted in a new energy vehicle, the box also occupies a large space, which increases the overall size of the new energy vehicle. Consequently, the weight of the new energy vehicle is increased to some extent, leading to higher energy consumption of the new energy vehicle during running or limited space for mounting battery modules in the battery pack box. To ensure a small contour size of the box, the only option is to reduce the volume of the battery module, which compromises the electric capacity of the battery module and consequently shortens the maximum driving range of the new energy vehicle.

### SUMMARY

In view of this, this application provides a battery pack box, a battery pack, and a vehicle, with an objective to solve the problem that the battery pack box has poor spatial compatibility in some cases, resulting in heavy weight of a new energy vehicle, which in turn causes the maximum driving range of the new energy vehicle to be not long enough.

According to a first aspect, this application provides a battery pack box including a box body, locking parts, and mounting parts. The box body includes a bottom plate and side plates extending from the bottom plate along a first direction. The locking parts are disposed on a side of the side plate away from the bottom plate in the first direction. The mounting parts are disposed on a side of the side plate close to the bottom plate in the first direction and disposed in correspondence with part of the locking parts in the first direction. Outer side edges of the locking part and mounting part disposed in correspondence in the first direction are aligned with each other in the first direction.

In the technical solutions of the embodiments of this application, the locking part and the mounting part are respectively provided on two sides of the side plate of the box body close to and away from the bottom plate in the first direction, and the outer side edges of the locking part and mounting part disposed in correspondence in the first direction are aligned with each other in the first direction, so that a locking surface, a sealing surface, and a mounting surface are compatible with each other in a same space in a height direction of the battery pack box, increasing the space utilization of the battery pack box.

In some embodiments, at least one operating position in communication with the locking part and the mounting part is formed between the locking part and mounting part disposed in correspondence in the first direction.

In the technical solutions of the embodiments of this application, the locking parts and mounting parts in the first direction are spaced apart in correspondence, so that the at least one operating position in communication with the locking part and the mounting part is formed between the locking part and mounting part located at a same end of the battery pack box, allowing for an operating space high enough for an operator to mount a battery pack onto a vehicle.

In some embodiments, part of the side plates each include an outer side plate and an inner side plate that are disposed apart from each other, a cavity is formed between the outer side plate and the inner side plate, the mounting part is located inside the cavity, and the outer side plate is provided with a notch in communication with the cavity to form the operating position.

In the technical solutions of the embodiments of this application, through the design of the side plate including the inner side plate and the outer side plate, a cavity is formed between the outer side plate and the inner side plate. In addition, the outer side plate is provided with the notch in communication with the cavity, which can ensure the strength of the side plate while achieving the effect of reducing weight of the battery pack box.

In some embodiments, the side plate further includes multiple stiffeners, and the multiple stiffeners are spaced apart in the first direction to divide the cavity into multiple sub-cavities.

In the technical solutions of the embodiments of this application, the foregoing design allows for the multiple stiffeners spaced apart in the cavity, improving the structural strength of the box.

In some embodiments, the locking part surrounds the side plate along a circumferential direction, the battery pack box includes two groups of mounting parts, and the two groups of mounting parts are spaced apart on two opposite sides of the side plate.

In the technical solutions of the embodiments of this application, the locking part surrounding the side plate along the circumferential direction increases a locking area between the battery pack box and an upper cover, allowing for more secure locking between the upper cover and the battery pack box and better sealing performance of the battery pack.

In some embodiments, the locking part is provided with multiple locking holes spaced apart in its extension direction.

In the technical solutions of the embodiments of this application, the locking part being provided with the multiple locking holes spaced apart in its extension direction enables the battery pack box and the upper cover to be locked using screws or bolts, facilitating mutual disassembly and assembly between the upper cover and the box and replacement of damaged battery modules.

In some embodiments, the battery pack box includes multiple sleeves, the multiple sleeves are spaced apart on the mounting part, and each of the sleeves is provided with a mounting hole running through the sleeve and extending along the first direction.

In the technical solutions of the embodiments of this application, with the sleeves mounted on the mounting part, various types of mounting holes may be provided on the sleeves, so that the sleeves can fit with different types of fasteners. When the sleeves and the mounting part are detachably mounted, the sleeves with different types of mounting holes can be replaced, allowing for higher compatibility of the battery pack box and adaptability of the battery pack box to various locking environments.

In some embodiments, the bottom plate includes a first bottom plate and a second bottom plate connected to each other, and the side plate includes a first side plate integrally formed with the first bottom plate and a second side plate integrally formed with the second bottom plate.

In the technical solutions of the embodiments of this application, the first side plate is integrally formed with the first bottom plate and the second side plate is integrally formed with the first bottom plate, so that a major structure of the box body is formed by splicing only two extruded profiles with same or different longitudinal cross-sections. When the first bottom plate and the second bottom plate, and the first side plate and the second side plate are symmetrical structures, it is only necessary to design and extrude one profile with a longitudinal cross-section into two profiles that can be spliced into the major structure of the box body, without using more components to splice into the box, thus making the processing and assembly of the box easier.

In some embodiments, the first bottom plate is connected to the second bottom plate through friction stir welding.

In the technical solutions of the embodiments of this application, because the battery module is mounted in an accommodating cavity, it is necessary to make the bottom wall of the battery pack box remain flat such that the battery module can be securely mounted in the accommodating cavity. The first bottom plate being connected to the second bottom plate through friction stir welding allows a welded joint between the first bottom plate and the second bottom plate in the box to remain flat, thereby allowing the bottom wall of the accommodating cavity of the battery pack box to remain flat.

In some embodiments, the bottom plate is provided with at least one drainage cavity, and the drainage cavity is in communication with two opposite ends of the bottom plate in a second direction perpendicular to the first direction.

In the technical solutions of the embodiments of this application, because the major structure of the box body may be spliced by two extruded profiles, a longitudinal cross-section of the profile may be designed such that the extruded bottom plate is provided with at least one drainage cavity in communication with two opposite ends of the bottom plate in a third direction. In this way, the drainage cavity can not only achieve the effect of reducing the weight, but also serve as a water through hole via which a water pipe can be connected to the battery pack.

According to a second aspect, this application provides a battery pack including the foregoing battery pack box and a battery module, where the side plate and bottom plate of the battery pack box jointly define an accommodating cavity, and the battery module is mounted and accommodated in the accommodating cavity of the battery pack box.

In the technical solutions of the embodiments of this application, the use of the battery pack box in the foregoing solutions in the battery pack makes room for mounting the battery module when the battery module is mounted in the accommodating cavity of the battery pack box. This can maximize the electric capacity of the battery pack, improving the volumetric packing efficiency of the battery pack. In addition, this can also reduce the volume of the battery pack, so that the battery pack does not need to occupy a large space when mounted in an electric vehicle.

According to a third aspect, this application provides a vehicle including the battery pack according to the foregoing embodiments. With a small contour size, the battery pack does not need to occupy a large space when mounted in the vehicle.

The foregoing description is merely an overview of the technical solutions of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, the same reference signs represent the same parts. In the accompanying drawings:
FIG. 1 is a schematic structural diagram of a battery pack box according to an embodiment of this application;
FIG. 2 is a schematic exploded view of a battery pack box according to an embodiment of this application;
FIG. 3 is an enlarged view of zone A in FIG. 1;
FIG. 4 is a schematic structural diagram of a profile of a box body according to an embodiment of this application; and
FIG. 5 is a schematic diagram of a longitudinal cross-section of a profile of a box body according to an embodiment of this application.

100. battery pack box; 101. operating position; 102. drainage cavity; 103. cavity; 110. box body; 1101. accommodating cavity; 111. first frame; 1110. first bottom plate; 1120. first side plate; 1121. inner side plate; 1122. outer side plate; 1123. stiffener; 113. second frame; 1131. second bottom plate; 1132. second side plate; 114. bottom plate; 115. side plate; 116. front plate; 117. rear plate; 120. locking part; 121. first locking part; 122. second locking part; 123. locking hole; 130. mounting part; 131. sleeve; 300. module mounting beam; and 500. fastener.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in this application as appropriate to specific situations.

Currently, with the development of economy in China and the rapid development of the automotive industry, the number of vehicles is gradually increasing. Traditional vehicles mainly use gasoline as power. However, this leads to increasingly prominent issues such as environmental pollution, energy shortage, resource depletion, and safety concerns. To maintain the sustainable development of the national economy and protect the human living environment and energy supply, people have been seeking various ways to solve these issues. With good environment friendliness, electric vehicles can not only protect the environment but also alleviate energy shortage and adjust energy structures. Currently, the development of electric vehicles has become a consensus among governments and the automotive industry worldwide. Electric vehicles have become a hot topic in the automotive industry, and they will have more extensive application and development in the future. A battery pack, as a power source of an electric vehicle, is one of the most important components of the electric vehicle, and the range of the battery pack has a crucial effect on the driving range of the electric vehicle.

The applicant has noted that currently, battery packs of electric vehicles in the market are all relatively large in volume and occupy large space when mounted in the vehicles, which is specifically reflected in the fact that most of battery pack boxes for accommodating battery modules are sheet metal boxes or metal alloy die-cast boxes. These two types of boxes can ensure the required strength but haven't provided a satisfactory solution for compatibility between cavity structures, locking surfaces, sealing surfaces, and mounting surfaces. Specifically, in the above two types of boxes, the mounting surface, sealing surface, and upper cover locking surface of the box need to independently occupy space in a height or thickness direction of the box, and the three elements are spatially incompatible, resulting in a large contour size of the box and a large size of the electric vehicle. Consequently, the weight of the new energy vehicle is increased to some extent, leading to higher energy consumption of the new energy vehicle during running. Or even if the battery pack has a small volume and does not occupy a large space when mounted, there is limited space for mounting battery modules in the battery pack box. To ensure that the contour size of the box does not occupy excessive mounting space when the box is mounted in the vehicle, the only option is to reduce the volume of the battery module, which compromises the electric capacity of the battery module and consequently reduces endurance of the battery pack and shortens the maximum driving range of the electric vehicle.

To solve this problem, the applicant has found through research that the battery pack box can be improved. Specifically, the structure of the box can be improved without occupying the space for mounting the battery module, so that the locking surfaces and sealing surfaces of the box and the upper cover as well as the mounting surface of the box when mounted in a vehicle are co-compatible with each other in the same space in the height or thickness direction of the box. This allows for a small volume of the battery pack box while ensuring that the space for mounting the battery module is not occupied, thus allowing the battery pack box to occupy no excessive mounting space when mounted in the vehicle.

Based on the foregoing considerations, to solve the problem of poor spatial compatibility of the battery pack, the applicant, through in-depth research, has designed a battery pack box. An open end and closed end of a box body are each provided with a locking part and a mounting part. In addition, edges of the locking part and mounting part located at a same end are aligned with each other, so that a locking surface, a sealing surface, and a mounting surface are compatible with each other in a same space in a height direction of the battery pack box, increasing the space utilization of the battery pack box.

The battery pack box according to the embodiments of this application may be used without limitation in battery packs in the field of electric vehicles. The battery pack box according to the embodiments of this application can also be used for accommodating battery packs of other electric transportation tools or electric devices, which can ensure a long battery life while ensuring that the battery pack does not occupy a large mounting space in the electric transportation tool or electric device, allowing for a longer running time.

The following describes the preferred embodiments of this utility model with reference to the accompanying drawings.

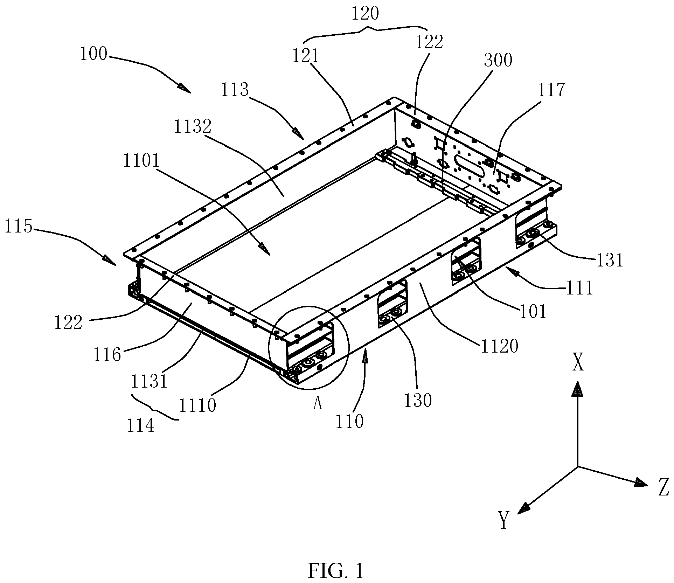

As shown in FIGs. 1, 2, and 3, a battery pack box 100 according to an embodiment of this application includes a box body 110, locking parts 120, and mounting parts 130. The box body 110 is a rectangular cubic thin-walled shell structure. The box body 110 is provided with an accommodating cavity 1101 with an open end, and the accommodating cavity 1101 is used for accommodating a battery module (not shown in the figure). The box body 110 includes a bottom plate 114 and side plates 115 extending from the bottom plate 114 along a first direction. The bottom plate 114 and the side plate 115 jointly define the accommodating cavity 1101. The locking parts 120 are disposed on a side of the side plate 115 away from the bottom plate 114 in the first direction. The mounting parts 130 are disposed on a side of the side plate 115 close to the bottom plate 114 in the first direction and disposed in correspondence with part of the locking parts 120 in the first direction. Outer side edges of the locking part 120 and mounting part 130 disposed in correspondence in the first direction are aligned with each other in the first direction. The locking part 120 is configured to lock an upper cover of a battery pack (not shown in the figure) to the battery pack box 100. The mounting part 130 is configured to mount the whole battery pack in a vehicle. When the battery pack box 100 is locked with the upper cover, a locking surface and a sealing surface overlap and are both located on a side of the locking part 120 close to the upper cover. The mounting surface is a side of the mounting part 130 close to the locking part 120. The locking part 120 and mounting part 130 disposed in correspondence at an end of the battery pack box 100 in the first direction are both rectangular elongated structures. In the figure, a direction X is a first direction, a direction Y is a second direction, and a direction Z is a third direction, where the directions X, Y, and Z are aligned with each other.

It can be understood that the box body 110 may be formed by splicing multiple plates or may be formed by die-casting or extrusion. When the box body 110 is formed by splicing multiple plates, the box body 110 may be made of a steel material. When the box body 110 is formed by die-casting or extrusion, the box body 110 may be made of an aluminum alloy material.

It can also be understood that the locking part 120 and the mounting part 130 may be separate parts mounted on the box body 110. Alternatively, the locking part 120 and the box body 110 may be integrally formed, and the mounting part 130 and the box body 110 may be integrally formed. In this embodiment, the locking part 120 and the box body 110 are integrally processed and formed, and the mounting part 130 and the box body 110 are integrally processed and formed.

It can also be understood that the locking part 120 and the mounting part 130 may alternatively be single block-shaped square or rectangular structures with short sides. A side of the box body 110 in the third direction may be provided with multiple locking parts 120 spaced apart in the second direction and multiple mounting parts 130 spaced apart in the second direction, as long as it is ensured that each locking part 120 is disposed opposite one mounting part 130 along the first direction.

A module mounting beam 300 may be mounted on a bottom wall of the accommodating cavity 1101 of the box body 110. In this embodiment, two module mounting beams 300 are mounted apart on the bottom wall of the accommodating cavity 1101 along the second direction, and a length direction of each module mounting beam 300 is the same as the third direction. For the module mounting beam 300, the module mounting beam 300 is used for mounting the battery module rather than making the battery module be in direct contact with the bottom wall of the accommodating cavity 1101, which makes it more convenient to pick up the battery module when the battery module is removed, and also prevents positive and negative electrodes of the battery module from coming into contact with each other and causing a short circuit of the battery module.

In the foregoing solution, the locking part 120 and the mounting part 130 are respectively provided on two sides of the side plate 115 of the box body 110 close to and away from the bottom plate 114 in the first direction, and the outer side edges of the locking part 120 and mounting part 130 disposed in correspondence in the first direction are aligned with each other in the first direction, so that a locking surface, a sealing surface, and a mounting surface are compatible with each other in a same space in a height direction of the battery pack box 100, increasing the space utilization of the battery pack box 100.

As shown in FIGs. 1, 2, and 3, in a specific arrangement, at least one operating position 101 in communication with the locking part 120 and the mounting part 130 is formed between the locking part 120 and mounting part 130 disposed in correspondence in the first direction.

It can be understood that the operating position 101 may be one elongated operating space formed in an outer side of a side wall of the box body 110 for both communication between the locking part 120 and the mounting part 130 and communication between two opposite ends of the box body 110 in the second direction; alternatively, the operating position 101 may be multiple operating spaces spaced apart.

The locking parts 120 and mounting parts 130 in the first direction are spaced apart in correspondence, so that at least one operating position 101 in communication with the locking part 120 and the mounting part 130 is formed between the locking part 120 and mounting part 130 located at a same end of the battery pack box 100, allowing for an operating space high enough for an operator to mount a battery pack in a vehicle.

As shown in FIGs. 1, 2, and 3, in a specific arrangement, part of the side plates 115 each include an outer side plate 1122 and an inner side plate 1121 that are disposed apart from each other, a cavity 103 is formed between the outer side plate 1122 and the inner side plate 1121, the mounting part 130 is located inside the cavity 103, and the outer side plate 1122 is provided with a notch in communication with the cavity 103 to form the operating position 101.

It can be understood that the side plate 115 is an enclosed quadrilateral ring structure, the side plate 115 surrounds the accommodating cavity 1101, an inner wall of the side plate 115 forms a side cavity wall of the accommodating cavity 1101, the side plate 115 at each of two opposite ends of the side plate 115 in the third direction includes a first side plate 1120 and a second side plate 1132, the first side plate 1120 and the second side plate 1132 each are a two-layer plate structure including the inner side plate 1121 and the outer side plate 1122, the side plate 115 includes a front plate 116 and a rear plate 117 at the two opposite ends of the second direction, and the front plate 116 and the rear plate 117 each may be a single-layer thin-walled plate structure. The outer side plate 1122 is cut to form multiple notches so as to form multiple operating positions 101.

It can be understood that the first side plate 1120 or the second side plate 1132 may be one-time extruded profile, and the inner side plate 1121 and the outer side plate 1122 of each profile are formed by one-time extrusion through the design of the longitudinal cross-section of the profile, without respectively welding two separate plates as the inner side plate 1121 and the outer side plate 1122 to the locking part 120 and the mounting part 130. The inner side plate 1121 and the outer side plate 1122 are fixedly disposed apart on the bottom plate 114 of the box body 110 along an end in the first direction. The front plate 116 and the rear plate 117 are fixedly disposed on the bottom plate 114 of the box body 110 along an end in the first direction. It can be understood that the side plate 115 and the bottom plate 114 may be connected via screws or bolts, or may be connected through riveting or welding. In this embodiment, the front plate 116 is in arc welding connection with the bottom plate 114, and the rear plate 117 is in arc welding connection with the bottom plate 114.

In some embodiments, the rear plate 117 may be provided with multiple through holes in communication with two opposite sides of the rear plate 117, where the through holes are used for mounting a connector of the battery pack and used as water inlet and outlet holes between the battery pack and the outside.

Such design makes it possible to form the cavity 103 between the outer side plate 1122 and the inner side plate 1121 through the design of the longitudinal cross-section of the profile of the first side plate 1120 or second side plate 1132 and the design of the first side plate 1120 or second side plate 1132 including the inner side plate 1121 and the outer side plate 1122. In addition, the outer side plate 1122 is provided with the notch in communication with the cavity 103, which can ensure the strength of the side plate 115 while achieving the effect of reducing the weight of the battery pack box 100.

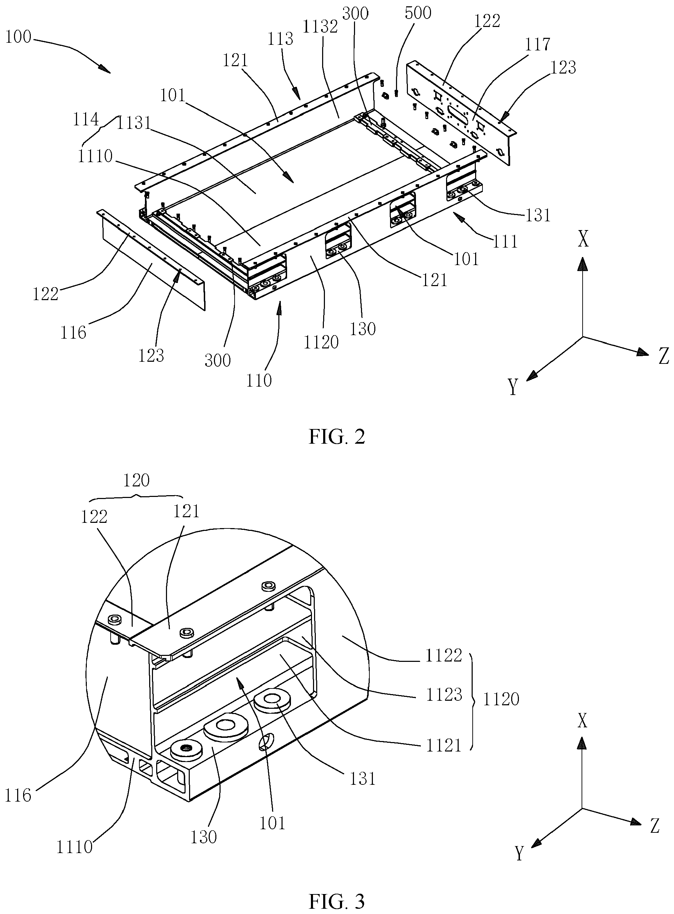

As shown in FIGs. 3, 4, and 5, the side plate 115 further includes multiple stiffeners 1123, and the multiple stiffeners 1123 are spaced apart in the first direction to divide the cavity 103 into multiple sub-cavities.

It can be understood that the multiple stiffeners 1123 and the multiple sub-cavities 103 may be formed by one-time extrusion through the design of the longitudinal cross-section of the profile. The quantity of the stiffeners 1123 is not limited herein. In this embodiment, two stiffeners 1123 are provided, so that the inner side plate 1121, the outer side plate 1122, the stiffeners 1123, part of the locking parts 120, and the mounting parts 130 form a structure in the shape of an approximately elongated rectangle with two horizontal lines in the middle when viewed from an end in the second direction.

Further designing the longitudinal cross-section of the profile of the first side plate 1120 or second side plate 1132 allows for the multiple stiffeners 1123 spaced apart in the cavity 103, improving the structural strength of the box.

As shown in FIGs. 1 and 2, in a specific arrangement, the locking parts 120 surround the side plate 115 along a circumferential direction, the battery pack box 100 includes two groups of mounting parts 130, and the two groups of mounting parts 130 are spaced apart on two opposite sides of the side plate 115.

It can be understood that the locking parts 120 include first locking parts 121 and second locking parts 122. The locking parts 120 disposed on sides of the first side plate 1120 and second side plate 1132 in the first direction are the first locking parts 121. The locking parts 120 disposed on sides of the front plate 116 and rear plate 117 in the second direction are the second locking parts 122. The first locking part 121 may be a separate part mounted on the first side plate 1120 or the second side plate 1132. Alternatively, the first locking part 121 and the first side plate 1120 may be integrally formed, or the first locking part 121 and the second side plate 1132 may be integrally formed. The second locking part 122 may be a separate part mounted on the side wall of the front plate 116 or rear plate 117. Alternatively, the second locking part 122 may be integrally processed and formed with the front plate 116 or the rear plate 117, may be formed through extrusion, or may be formed by bending a single piece of sheet metal. A side of the second locking part 122 close to the upper cover is flush with a side of the first locking part 121 close to the upper cover. In this embodiment, the first locking part 121 and the box body 110 are integrally processed and formed. The front plate 116 and the rear plate 117 each are a separate plate. The second locking part 122 of the front plate 116 and the second locking part 122 of the rear plate 117 are each formed by bending sheet metal.

The first locking part 121 and the second locking part 122 jointly form the locking part 120 surrounding the side plate 115 along the circumferential direction, which increases a locking area between the battery pack box 100 and the upper cover, allowing for more secure locking between the upper cover and the battery pack box 100 of the battery pack and better sealing performance of the battery pack.

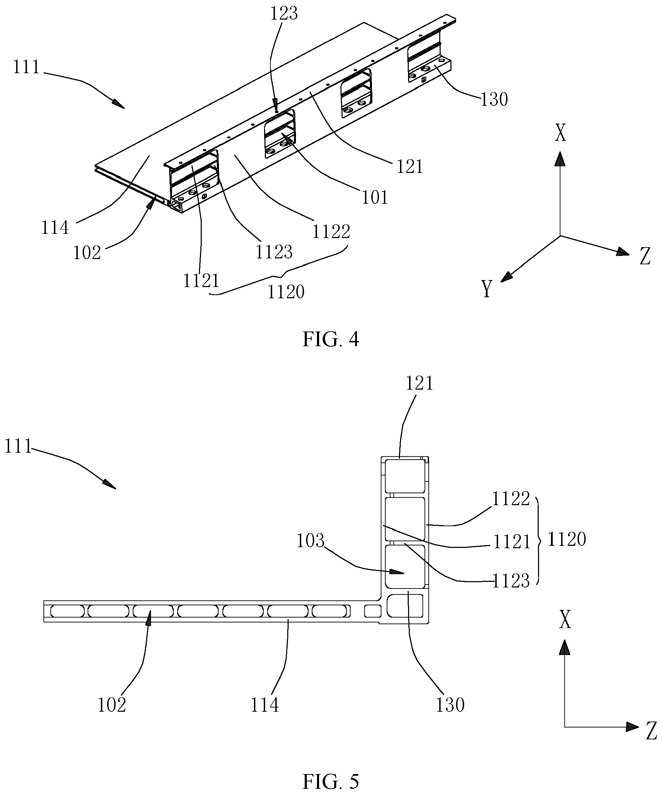

As shown in FIGs. 2 and 4, in a specific arrangement, the locking part 120 is provided with multiple locking holes 123 spaced apart in its extension direction.

It can be understood that the multiple locking holes 123 provided on the locking part 120 and spaced apart in the extension direction of the locking part 120 are used for locking the battery pack box 100 with the upper cover via fasteners 500. The locking holes 123 may be threaded holes or straight holes, which is not limited herein. In this embodiment, the locking holes 123 are threaded holes. The battery pack box 100 and the upper cover are interlocked via pull riveting screws.

The locking part 120 being provided with the multiple locking holes 123 spaced apart in its extension direction enables the battery pack box 100 and the upper cover to be locked using screws or bolts, facilitating mutual disassembly and assembly between the upper cover and the box and replacement of damaged battery modules.

As shown in FIGs. 1, 2, and 3, in a specific arrangement, the battery pack box 100 includes multiple sleeves 131, the multiple sleeves 131 are spaced apart on the mounting part 130, and each of the sleeves 131 is provided with a mounting hole running through the sleeve 131 and extending along the first direction.

The sleeve 131 is a columnar structure. The mounting surface is provided with multiple connection holes spaced apart in the first direction, so that each sleeve 131 is sleeved in one connection hole. It can be understood that the sleeve 131 may be connected to the connection hole in a manner of directly inserting the sleeve 131 into the connection hole or welding the sleeve 131 to the periphery of the connection hole such that the sleeve 131 is fixed in the connection hole. When the box body 110 is formed by die-casting, the sleeve 131 may also be formed by die-casting, so that the sleeve 131 and the mounting part 130 are integrally formed.

In this embodiment, two or three sleeves 131 are mounted at each operating position 101. The mounting holes of each sleeve 131 may be of the same type, and the mounting holes may all be through holes or threaded holes or may include both threaded holes and through holes. This is not limited herein and is determined depending on the specific locking environment of the battery pack. In this embodiment, the mounting holes of the two or three sleeves 131 mounted at each operating position 101 include both through holes and threaded holes.

With the sleeves 131 mounted on the mounting part 130, various types of mounting holes may be provided on the sleeves 131 so as to fit with different types of fasteners 500. When the sleeves 131 and the mounting part 130 are detachably mounted, the sleeves 131 with different types of mounting holes can be replaced, allowing for higher compatibility of the battery pack box 100 and adaptability of the battery pack box 100 to various locking environments.

As shown in FIGs. 1 and 2, in a specific arrangement, the bottom plate 114 includes a first bottom plate 1110 and a second bottom plate 1131 connected to each other, where the first bottom plate 1110 is integrally formed with the first side plate 1120, and the second bottom plate 1131 is integrally formed with the second side plate 1132.

It can be understood that the first bottom plate 1110 and the second side plate 1132 may be or may not be mutually symmetrical structures, and the second bottom plate 1131 and the second side plate 1132 may be or may not be mutually symmetrical structures. The first bottom plate 1110 and the first side plate 1120 jointly form a first frame 111, the second bottom plate 1131 and the second side plate 1132 jointly form a second frame 113, and the first frame 111 and the second frame 113 may be formed from an aluminum alloy material through extrusion. When the first frame 111 and the second frame 113 are mutually symmetrical structures, it is possible to design only one aluminum alloy profile with a longitudinal cross-section extruded into two profiles, then one profile is turned to be spliced with the other profile, and the front plate 116 is spliced with the rear plate 117, to obtain the structure of the box body 110. When the first frame 111 and the second frame 113 are not mutually symmetrical, it is necessary to design two aluminum alloy profiles with longitudinal cross-sections extruded into two profiles having different cross-sections, then the two profiles are spliced together to obtain the structure of the box body 110. In this embodiment, the first frame 111 and the second frame 113 are completely symmetrical in structure and both are formed from an aluminum alloy material through extrusion. The longitudinal cross-sections of the profiles of the first frame 111 and the second frame 113 are exactly the same. The structure of the second frame 113 is not described herein.

It can also be understood that when the first side plate 1120 and the first bottom plate 1110 are integrally formed and the second side plate 1132 and the second bottom plate 1131 are integrally formed, the longitudinal cross-sections of the profiles of the first frame 111 and the second frame 113 are approximately L-shaped.

The structure of the box body 110 includes only four parts: the first frame 111, the second frame 113, the front plate 116, and the rear plate 117. The first frame 111, the second frame 113, the front plate 116, and the rear plate 117 are spliced together to form the bottom wall and side wall of the battery pack box 100, so that the box body 110 is spliced by only two extruded profiles with same or different longitudinal cross-sections and two plates. When the box body 110 is completely symmetrical in structure, it is only necessary to design one profile with a longitudinal cross-section extruded into two profiles, then the two profiles are spliced with two same plates to form the structure of the box body 110, without using more components spliced into the box, thus making it easier to process and assemble the battery pack box 100, reducing weld positions of the box, and reducing weld defects of the box.

In some embodiments, the first bottom plate 1110 is connected to the second bottom plate 1131 through friction stir welding.

The friction stir welding requires welding twice. To be specific, it is necessary to weld twice on two opposite sides of a welded joint along the third direction, and the friction stir welding features flat welded joints.

Because the battery module is mounted in the accommodating cavity 1101, it is necessary to make the bottom wall of the battery pack box 100 remain flat such that the battery module can be securely mounted in the accommodating cavity 1101. The first bottom plate 1110 being connected to the second bottom plate 1131 through friction stir welding allows a welded joint between the first bottom plate 1110 and the second bottom plate 1131 in the box to remain flat, thereby allowing a bottom wall of the accommodating cavity 1101 of the battery pack box 100 to remain flat.

As shown in FIGs. 4 and 5, in a specific arrangement, the bottom plate 114 is provided with at least one drainage cavity 102, and the drainage cavity 102 is in communication with two opposite ends of the bottom plate 114 in the second direction.

It can be understood that in this embodiment, the first frame 111 and the second frame 113 are both aluminum alloy profiles, so that the bottom plate 114 is extruded to form a square structure, a structure in the shape of a horizontal elongated rectangle with one horizontal line in the middle, or a structure in the shape of a horizontal elongated rectangle with two horizontal lines in the middle, thereby forming at least one drainage cavity 102 in communication with two opposite ends of the bottom plate 114 in the second direction. In this embodiment, the bottom plate 114 is a structure in the shape of a horizontal elongated rectangle with two horizontal lines in the middle, so that the drainage cavity 102 is provided in plurality.

Because the first frame 111 or the second frame 113 may be one extruded profile, a longitudinal cross-section of the profile may be designed such that the extruded first bottom plate 1110 or second bottom plate 1131 is provided with at least one drainage cavity 102 in communication with two opposite ends of the bottom plate 114 in the second direction. In this way, the drainage cavity 102 can not only achieve the effect of reducing the weight, but also serve as a water through hole via which a water pipe can be connected to the battery pack.

According to some embodiments of this application, referring to FIG. 1 to FIG. 5, this application provides a battery pack box 100. The battery pack box 100 includes a box body 110, locking parts 120, and mounting parts 130. The box body 110 is provided with an accommodating cavity 1101. The box body 110 includes a first frame 111, a second frame 113, a front plate 116, and a rear plate 117. The first frame 111 includes a first bottom plate 1110 and a second side plate 1132. The second frame 113 includes a second bottom plate 1131 and a second side plate 1132. The first bottom plate 1110 and the first side plate 1120 are integrally formed, and the second bottom plate 1131 and the second side plate 1132 are integrally formed. The first bottom plate 1110 and the second bottom plate 1131 jointly form the bottom plate 114. The first side plate 1120, the second side plate 1132, the front plate 116, and the rear plate 117 jointly form the side plate 115. The front plate 116 and the rear plate 117 are respectively fixed to two opposite ends of the bottom plate 114 in a second direction through arc welding. The side plate 115 and the bottom plate 114 jointly define the accommodating cavity 1101. The locking parts 120 include first locking parts 121 and second locking parts 122. Two groups of first locking parts 121 are respectively disposed on sides of the first side plate 1120 and second side plate 1132 away from the bottom plate 114 in a first direction. Two groups of second locking parts 122 are respectively disposed on sides of the front plate 116 and rear plate 117 away from the bottom plate 114 in the second direction. In this way, the locking parts 120 surround the side plate 115 along a circumferential direction. Two groups of mounting parts 130 are respectively disposed on sides of the first side plate 1120 and second side plate 1132 close to the bottom plate 114 in the first direction. Outer side edges of the first locking part 121 and mounting part 130 disposed in correspondence in the first direction are aligned with each other in the first direction.

The first bottom plate 1110, the first side plate 1120, one group of first locking parts 121, and one group of mounting parts 130 are integrally formed. The second bottom plate 1131, the second side plate 1132, the other group of first locking parts 121, and the other group of mounting parts 130 are also integrally formed. The integrally formed structures are both approximately L-shaped, are both formed by extruding an aluminum rod on an extruder via an extrusion die with a fixed cross-section shape, and have the same longitudinal cross-sections. The front plate 116 and one group of second locking parts 122 are integrally formed, and the rear plate 117 and the other group of second locking parts 122 are integrally formed. One aluminum alloy plate is bent to form the front plate 116 and one group of second locking parts 122, and one aluminum alloy plate is bent to form the rear plate 117 and one group of second locking parts 122. The first bottom plate 1110 and the second bottom plate 1131 are welded together through friction stir welding, so that the battery pack box 100 is a structure that is completely symmetrical in both front-rear direction and left-right direction.

Through the cross-section design of the profile, the first side plate 1120, the second side plate 1132, the first bottom plate 1110, and the second bottom plate 1131 are all two-layer plate structures. The first side plate 1120 and the second side plate 1132 each include an inner side plate 1121 and an outer side plate 1122, and the inner side plate 1121 and the outer side plate 1122 form a cavity 103. The first locking part 121 and one group of mounting parts 130 are all located at two ends of the cavity 103 in the first direction. The first side plate 1120 and the second side plate 1132 each further include multiple stiffeners 1123, and the multiple stiffeners 1123 are spaced apart in the first direction to divide the cavity 103 into multiple sub-cavities 103, so that the first side plate 1120 and the second side plate 1132 each are in the shape of an approximately elongated rectangle with two horizontal lines in the middle. The outer side plate 1122 is cut such that the outer side plate 1122 is further provided with notches in communication with the cavity 103 to form multiple operating positions 101. In addition, the first bottom plate 1110 and the second bottom plate 1131 are further provided with multiple drainage cavities 102 in communication with two opposite ends in the second direction.

The locking part 120 is provided with multiple locking holes 123 spaced apart in its extension direction. The locking holes 123 are threaded holes. The battery pack box 100 and an upper cover are interlocked via pull riveting screws. The battery pack box 100 includes multiple sleeves 131. The multiple sleeves 131 are detachably spaced apart on the mounting part 130. Each of the sleeves 131 is provided with a mounting hole running through the sleeve 131 and extending along the first direction. Two or three sleeves 131 are mounted at each operating position 101. Mounting holes of the two or three sleeves 131 mounted at each operating position 101 include both through holes and threaded holes. In this way, when mounted onto a vehicle, the battery pack box 100 of this application can be adapted to two different locking manners: bolt connection and screw connection.

In addition, the rear plate 117 is provided with multiple through holes in communication with two opposite sides of the rear plate 117, where the through holes are used for mounting a connector of the battery pack and used as water inlet and outlet holes between the battery pack and the outside. Two module mounting beams 300 are mounted on a bottom wall of the accommodating cavity 1101 of the box body 110. The two module mounting beams 300 are mounted apart on the bottom wall of the accommodating cavity 1101 along the second direction, and a length direction of each module mounting beam 300 is the same as the third direction.

This application further provides a battery pack (not shown in the figure). The battery pack includes the foregoing battery pack box 100 and a battery module, where the battery module is mounted and accommodated in the accommodating cavity 1101 of the battery pack box 100.

It can be understood that the battery pack may be used in electric vehicles and may also used in other electric transportation tools or electric devices.

The use of the battery pack box 100 in the foregoing solutions in the battery pack makes room for mounting the battery module when the battery module is mounted in the accommodating cavity 1101 of the battery pack box 100. This can maximize the electric capacity of the battery pack, improving the volumetric packing efficiency of the battery pack. In addition, this can also reduce the volume of the battery pack, achieving a balance between the volume of the battery pack and the electric capacity of the battery module.

This application further provides a vehicle (not shown in the figure) including the foregoing battery pack. The battery pack is configured to provide power for the vehicle. The use of the battery pack in the foregoing solutions in the vehicle allows for a small contour size of the battery pack, so that the battery pack does not need to occupy a large space when mounted in the vehicle. In addition, this can ensure high electric capacity of the battery module in the battery pack as much as possible, thus allowing the battery pack to provide long-term power for the vehicle such that the vehicle can run for a longer range.

## Claims

1. A battery pack box, comprising:
a box body, wherein the box body comprises a bottom plate and side plates extending from the bottom plate along a first direction;
locking parts, wherein the locking parts are disposed on a side of the side plate away from the bottom plate in the first direction; and
mounting parts, wherein the mounting parts are disposed on a side of the side plate close to the bottom plate in the first direction and disposed in correspondence with part of the locking parts in the first direction;
wherein outer side edges of the locking part and mounting part disposed in correspondence in the first direction are aligned with each other in the first direction.

2. The battery pack box according to claim 1, wherein at least one operating position in communication with the locking part and the mounting part is formed between the locking part and mounting part disposed in correspondence in the first direction.

3. The battery pack box according to claim 2, wherein part of the side plates each comprise an outer side plate and an inner side plate that are disposed apart from each other, a cavity is formed between the outer side plate and the inner side plate, the mounting part is located inside the cavity, and the outer side plate is provided with a notch in communication with the cavity to form the operating position.

4. The battery pack box according to claim 3, wherein the side plate further comprises multiple stiffeners, and the multiple stiffeners are spaced apart in the first direction to divide the cavity into multiple sub-cavities.

5. The battery pack box according to any one of claims 1 to 4, wherein the locking part surrounds the side plate along a circumferential direction, the battery pack box comprises two groups of mounting parts, and the two groups of mounting parts are spaced apart on two opposite sides of the side plate.

6. The battery pack box according to any one of claims 1 to 5, wherein the locking part is provided with multiple locking holes spaced apart in its extension direction.

7. The battery pack box according to any one of claims 1 to 6, wherein the battery pack box comprises multiple sleeves, the multiple sleeves are spaced apart on the mounting part, and each of the sleeves is provided with a mounting hole running through the sleeve and extending along the first direction.

8. The battery pack box according to any one of claims 1 to 7, wherein the bottom plate comprises a first bottom plate and a second bottom plate connected to each other, and the side plate comprises a first side plate integrally formed with the first bottom plate and a second side plate integrally formed with the second bottom plate.

9. The battery pack box according to claim 8, wherein the first bottom plate is connected to the second bottom plate through friction stir welding.

10. The battery pack box according to any one of claims 1 to 9, wherein the bottom plate is provided with at least one drainage cavity, and the drainage cavity is in communication with two opposite ends of the bottom plate in a second direction perpendicular to the first direction.

11. A battery pack, comprising a battery module and the battery pack box according to any one of claims 1 to 10, wherein the side plate and bottom plate of the battery pack box jointly define an accommodating cavity, and the battery module is mounted and accommodated in the accommodating cavity of the battery pack box.

12. A vehicle, comprising the battery pack according to claim 11.
